# EUROPEAN PATENT APPLICATION

(11) **EP 4 815 175 A1**
(43) Date of publication of application: **30.09.2026**
(21) Application number: 26165382.8
(22) Date of filing: 17.03.2026
(51) Int. Cl.: H01M 50/531, H01M 50/533, H01M 50/536, H01M 50/538

(54) **ENERGY STORAGE DEVICE AND ENERGY STORAGE SYSTEM**

(30) Priority: 17.03.2025 CN 202510310520
(71) Applicant: Xiamen Hithium Energy Storage Technology Co., Ltd., Xiamen, Fujian 361100 (CN)
(72) Inventor: LI, Pengzhao, Xiamen, 361100 (CN); WANG, Chenyu, Xiamen, 361100 (CN); WU, Yangyuming, Xiamen, 361100 (CN); FENG, Pengyang, Xiamen, 361100 (CN); ZHENG, Jianming, Xiamen, 361100 (CN); LU, Guangbo, Xiamen, 361100 (CN)
(74) Representative: RGTH

(57) **Abstract**

This application discloses an energy storage system (100) and an energy storage system (1000). The energy storage system (100) includes an electrode core (14). A plurality of layers of tabs (142) of the electrode core (14) include a central tab (1421), a first side tab (1422), and a second side tab (1423). A Cartesian coordinate system is established with a root (142a) of the second side tab (1423) as an origin, a thickness direction of the electrode core (14) as an x-axis, and an extension direction of the tab (142) as a y-axis. A coordinate of the root (142a) of any tab (142) is (x, 0). When the plurality of layers of tabs (142) are not bent and the first side surface (151) is not oriented toward the electrode core (14), a coordinate of a connection position of the first side tab (1422) is (a, b). When the first side surface (151) is oriented toward the electrode core (14), a coordinate of the connection position is (c, d), in which ((a-x)²+b²)-{(c-x)²+d²}>0.

## Description

### TECHNICAL FIELD

This application relates to the technical field of energy storage, particularly to an energy storage device and an energy storage system.

### BACKGROUND

During electrode core processing, an adapter is typically disposed on one side of a plurality of layers of tabs of an electrode core, and the plurality of layers of tabs are pressed against the adapter and then welded to the adapter, thereby completing the assembly of the adapter and the plurality of layers of tabs.

When the tabs are formed by die-cutting in the related art, the plurality of layers of tabs are usually die-cut into a same height, that is, a height of each tab protruding relative to the electrode core is identical. During welding, a tab on one side among the plurality of layers of tabs is pressed toward another side onto the adapter, and tail ends of the plurality of layers of tabs away from the electrode core exhibits an uneven profile. For example, tail ends of the plurality of layers of tabs form a step structure with a gradient gradually increasing in a direction adjacent to the adapter, and a welding area of the tab farthest from the adapter is greatly reduced. To ensure that a welding mark can fall on each tab and ensure the welding quality of the tab, tabs with greater heights are required, which increases foil material costs of the electrode core and internal resistance of the tabs, thereby affecting performance of the electrode core.

### SUMMARY

Embodiments of this application disclose an energy storage device and an energy storage system, which can reduce a height of a tab protruding relative to an electrode core to lower foil material costs of the electrode core, and reduce internal resistance of the tab, thereby improving performance of the electrode core, and avoiding straining or tearing the tab.

To achieve the above objectives, a first aspect of this application discloses an energy storage device, including:
a housing, having an inner cavity and an opening in communication with the inner cavity;
an end cover assembly, arranged at the opening and sealing the opening, the end cover assembly having a terminal hole penetrating the end cover assembly;
a terminal, passing through the terminal hole;
an electrode core, disposed in the inner cavity and including an electrode core body and a plurality of layers of tabs disposed on the electrode core body, wherein the plurality of layers of tabs are spaced along a thickness direction of the electrode core; the plurality of layers of tabs include a central tab, a first side tab, and a second side tab; the first side tab and the second side tab are respectively located on two sides of the central tab in the thickness direction of the electrode core; and each of the first side tab and the second side tab is bent toward the central tab; and
an adapter, having a first side surface and a second side surface opposite to each other, wherein the first side surface is electrically connected to the first side tab, and the second side surface is electrically connected to the terminal,
wherein the plurality of layers of tabs are bendable from a first state to a second state, the first state is configured as a state where the plurality of layers of tabs are not bent and the first side surface is not oriented toward the electrode core body, and the second state is configured as a state where the plurality of layers of tabs are bent and the first side surface is oriented toward the electrode core body;
wherein each tab has a root connected to the electrode core body, and the first side tab has a connection position for connection with the adapter; wherein a Cartesian coordinate system is established with the root of the second side tab as an origin, the thickness direction of the electrode core as an x-axis, and an extension direction of the tab as a y-axis; a coordinate of the root of any tab is (x, 0); when the plurality of layers of tabs are in the first state, a coordinate of the connection position is (a, b); and when the plurality of layers of tabs are in the second state, a coordinate of the connection position is (c, d),
wherein ((a-x)²+b²)-{(c-x)²+d²} >0.

In the energy storage device according to the embodiments of this application, the first side tab and the second side tab on two sides of the central tab are bent and pressed toward the central tab respectively, and then the first side surface of the adapter is attached and electrically connected to the first side tab, which can reduce a bending degree of the second side tab, compared with merely bending and pressing the second side tab toward the first side tab. Consequently, while the second side tab has a sufficient welding area after being bent, the height of each layer of tab, especially the height of the second side tab, may be reduced, to lower the foil material costs of the electrode core and reduce the internal resistance of the tabs, thereby improving the electrode core performance.

Meanwhile, the energy storage device satisfies the following relationship: ((a-x)²+b²)-{(c-x)²+d²} >0, in which b, c, d, k and x may all be obtained based on actual electrode core tests. By calculating the above relationship, the range of "a" may be calculated, and a range of a distance between the connection position of the first side tab and the root of the first side tab in the thickness direction of the electrode core may be determined after the first side tab is bent toward the central tab, to determine a bending degree of the first side tab toward the central tab. This prevents excessive tension on the first side tab when the plurality of layers of tabs are bent such that the first side surface is oriented toward the electrode core body, avoids over-bending of the first side tab, and further prevents the occurrence of straining or tearing of the first side tab when the plurality of layers of tabs need to be bent such that the first side surface of the adapter is oriented toward the electrode core body, thus ensuring the conductive reliability of the tabs.

As an optional implementation, in an embodiment of the first aspect of this application, an expansion rate of the electrode core in the thickness direction of the electrode core is k, and the energy storage device satisfies a following relationship:$\left({\left(a-x\right)}^{2}+{b}^{2}\right) - \left\{{\left(c-\left(1+k\right)x\right)}^{2}+{d}^{2}\right\} > 0 .$

When the energy storage device satisfies the relationship: ((a-x)²+b²)-{(c-(1+k)x)²+d²} >0, excessive pulling of the first side tab may be prevented when the electrode core expands, thereby avoiding straining or tearing the first side tab when the electrode core expand, and ensuring the conductivity reliability of the tab.

As an optional implementation, in an embodiment of the first aspect of this application, when the first side tab and the second side tab are not bent toward the central tab, and the first side tab is not connected to the first side surface, a height of each tab protruding relative to the electrode core body is equal.

Such arrangement can keep the height of each tab protruding relative to the electrode core body identical, eliminating the need for special die-cutting of the tab, and simplifying the die-cutting process for the tab.

As an optional implementation, in an embodiment of the first aspect of this application, when the first side tab and the second side tab are not bent toward the central tab, and the first side tab is not connected to the first side surface, a height of the first side tab protruding relative to the electrode core body is greater than a height of the central tab protruding from the body relative to the electrode core, and/or a height of the second side tab protruding relative to the electrode core body is greater than the height of the central tab protruding relative to the electrode core body.

With such design, after each of the first side tab and the second side tab is bent and pressed toward the central tab, that is, after the plurality of layers of tabs are pressed and connected, respective ends of the central tab, the first side tab, and the second side tab away from the electrode core are flush. Compared to a configuration where the height of each tab is equal, at least the height of the central tab may be reduced, which is beneficial for reducing the foil material costs of the electrode core and the internal resistance of the tabs, and enhancing the electrode core performance.

As an optional implementation, in an embodiment of the first aspect of this application, when the first side tab and the second side tab are not bent toward the central tab, and the first side tab is not connected to the first side surface, a height of the tab protruding relative to the electrode core body first decreases and then increases along the thickness direction of the electrode core.

With such arrangement, after each of the first side tab and the second side tab is bent and pressed toward the central tab, that is, after the plurality of layers of tabs are pressed and connected, respective ends of individual tab layers away from the electrode core may be flush, which can not only improve the aesthetic degree and fixing firmness of the tabs, but also reduce the heights of the tabs compared to equal heights of individual tabs, thereby reducing the foil material costs of the electrode core and the internal resistance of the tabs, and enhancing the electrode core performance.

As an optional implementation, in an embodiment of the first aspect of this application, when the first side tab and the second side tab are not bent toward the central tab, and the first side tab is not connected to the first side surface, a spacing between any two adjacent layers of tabs is equal, which allows individual layers of tabs to be arranged at equal intervals, thereby ensuring the charging and discharging performance and the overall performance of the electrode core.

As an optional implementation, in an embodiment of the first aspect of this application, when the first side tab and the second side tab are not bent toward the central tab, and the first side tab is not connected to the first side surface, a height difference between any two adjacent layers of tabs protruding relative to the electrode core body is equal.

Such arrangement makes the plurality of layers of tabs neater after they are pressed, and an arithmetic progression of heights of the plurality of layers of tabs protruding relative to the electrode core body can create a regular variation, to facilitate the die-cutting of individual layers of tabs and achieve precise control over the heights of individual layers of tabs.

As an optional implementation, in an embodiment of the first aspect of this application, the energy storage device is a polygonal battery or a cylindrical battery. It is evident that the energy storage device in this application is not limited to a battery with a specific shape, but rather the energy storage device exhibits diverse and flexible shapes.

As an optional implementation, in an embodiment of the first aspect of this application, the terminal hole includes a first terminal hole and a second terminal hole;
the terminal includes a positive terminal and a negative terminal, the positive terminal passes through the first terminal hole, and the negative terminal passes through the second terminal hole;
the electrode core includes a first electrode core and a second electrode core, the first electrode core includes a first electrode core body and a first positive tab and a first negative tab that are disposed on the first electrode core body, the second electrode core includes a second electrode core body and a second positive tab and a second negative tab that are disposed on the second electrode core body, each of the first electrode core body and the second electrode core body includes the electrode core body, and each of the first positive tab, the first negative tab, the second positive tab, and the second negative tab includes the plurality of layers of tabs;
wherein the first electrode core and the second electrode core are arranged along the thickness direction of the electrode core; along the thickness direction of the electrode core, the first positive tab is opposite to the second positive tab, and the first negative tab is opposite to the second negative tab, and/or along the thickness direction of the electrode core, the first positive tab and the first negative tab are on a side of the first electrode core body facing away from the second electrode core body, and the second positive tab and the second negative tab are on a side of the second electrode core body facing away from the first electrode core body; and
the adapter includes a first adapter component and a second adapter component, the first adapter component is electrically connected to the positive terminal respectively, the first positive tab, and the second positive tab, and the second adapter component is electrically connected to the negative terminal, the first negative tab, and the second negative tab respectively.

It may be understood that during an assembly process of the electrode core, the first electrode core and the second electrode core are arranged along a height direction of the electrode core, and in the height direction of the electrode core, the first negative tab of the first electrode core and the second negative tab of the second electrode core may be oppositely arranged, and the first positive tab of the first electrode core and the second positive tab of the second electrode core may be oppositely arranged. Thus, the welding of the first adapter component with the first positive tab and the second positive tab, and the welding of the second adapter component with the first negative tab and the second negative tab may be facilitated, which is conductive to achieving the welding of the first adapter component with the first positive tab and the second positive tab, and quickly achieving the welding of the second adapter component with the first negative tab and the second negative tab, and saving welding time.

In addition, since the first positive tab of the first electrode core and the second positive tab of the second electrode core are both located outside the electrode core, and the first negative tab of the first electrode core and the second negative tab of the second electrode core are both located outside the electrode core, when the first electrode core and the second electrode core are arranged along the thickness direction of the electrode core, positions of the first positive tab and the second positive tab are far apart, and positions of the first negative tab and the second negative tab are far apart, to prevent a short circuit caused by overlapping between the first positive tab and the second positive tab. Moreover, in the event of a short circuit caused by overlapping between the first negative tab and the second negative tab, both the first positive tab and the second positive tab may have a relatively large connection area with the first adapter component, and both the negative tab and the second negative tab may have a relatively large connection area with the second adapter component, which is beneficial for enhancing the connection strength between the electrode core and the adapter, and avoiding conductive failure caused by too low connection strength between the electrode core and the adapter.

A second aspect of this application discloses an energy storage system, including the energy storage device as described in the first aspect. The energy storage system having the energy storage device described in the first aspect can also reduce the height of the tab protruding relative to the electrode core, to reduce the foil material costs of the electrode core and the internal resistance of the tab, thereby improving the electrode core performance, and avoid straining or tearing the tab.

Compared with the related art, this application has the following beneficial effects.

For the energy storage device and the energy storage system according to the embodiments of this application, the first side tab and the second side tab on two sides of the central tab are bent and pressed toward the central tab respectively, and then the first side surface of the adapter is attached and electrically connected to the first side tab, which can reduce a bending degree of the second side tab, compared with merely bending and pressing the second side tab toward the first side tab. Consequently, while the second side tab has a sufficient welding area after being bent, the height of each layer of tab, especially the height of the second side tab, may be reduced, to lower the foil material costs of the electrode core and reduce the internal resistance of the tabs, thereby improving the electrode core performance.

Meanwhile, the energy storage device satisfies the following relationship: ((a-x)²+b²)-{(c-x)²+d²} >0, in which b, c, d, k, and x may all be obtained based on actual electrode core tests. By calculating the above relationship, the range of "a" may be calculated, and a range of a distance between the connection position of the first side tab and the root of the first side tab in the thickness direction of the electrode core after the first side tab is bent toward the central tab may be determined, to determine a bending degree of the first side tab toward the central tab. This prevents excessive tension on the first side tab when the plurality of layers of tabs are bent such that the first side surface is oriented toward the electrode core body, avoids over-bending of the first side tab, and further prevents the occurrence of straining or tearing of the first side tab when the plurality of layers of tabs need to be bent such that the first side surface of the adapter is oriented toward the electrode core body, thus ensuring the conductive reliability of the tabs.

### BRIEF DESCRIPTION OF THE DRAWINGS

To explain the technical solutions in the embodiments of this application more clearly, the drawings required for the embodiments will be briefly introduced below. Evidently, the drawings described below merely represent some embodiments of this application. For those skilled in the art, other drawings may be obtained based on these drawings without creative effort.
FIG. 1 is a structural schematic view of an electrode core and an adapter in the related art;
FIG. 2 is a structural schematic view of an electrode core in the related art;
FIG. 3 is a first structural schematic view of an energy storage system disclosed in embodiments of this application;
FIG. 4 is a second structural schematic view of an energy storage system disclosed in embodiments of this application;
FIG. 5 is a structural schematic view of an energy storage device disclosed in embodiments of this application;
FIG. 6 is an exploded schematic view of an energy storage device disclosed in embodiments of this application;
FIG. 7 is a sectional view of an energy storage device disclosed in embodiments of this application along an N-N direction in FIG. 5;
FIG. 8 is a structural schematic view of two electrode cores disclosed in embodiments of this application;
FIG. 9 is a structural schematic view of two electrode cores and two adapters disclosed in embodiments of this application;
FIG. 10 is a structural schematic view of two electrode cores and two adapters disclosed in embodiments of this application from another angle of view;
FIG. 11 is a structural schematic view of an electrode core and an adapter disclosed in embodiments of this application;
FIG. 12 is a partially enlarged view at M in FIG. 7;
FIG. 13 is a schematic view illustrating theoretical calculation for determining a connection position between a first side tab and an adapter disclosed in embodiments of this application;
FIG. 14 is a first structural schematic view of an electrode core disclosed in embodiments of this application;
FIG. 15 is a second structural schematic view of an electrode core disclosed in embodiments of this application;
FIG. 16 is a third structural schematic view of an electrode core disclosed in embodiments of this application;
FIG. 17 is a fourth structural schematic view of an electrode core disclosed in embodiments of this application.

### Main Reference numerals:

1000- energy storage system;
100- energy storage device; 11- housing; 111- inner cavity; 112- opening; 12- end cover assembly; 12a- terminal hole; 121a- first terminal hole; 121b- second terminal hole; 13- terminal; 131- positive terminal; 132- negative terminal; 14- electrode core; 14a- first electrode core; 14a1-first electrode core body; 14a2- first positive tab; 14a3- first negative tab; 14b- second electrode core; 14b1- second electrode core body; 14b2- second positive tab; 14b3- second negative tab; 141-electrode core body; 142- tab; 142a- root; 1421- central tab; 1422- first side tab; 1422a- connection position; 1423- second side tab; 15- adapter; 15a- first adapter component; 15b- second adapter component; 151- first side surface; 152- second side surface;
200- electric energy conversion device; 300- first user load; 400- second user load;
210- high-voltage cable; 310- first electric energy conversion device; 410- second electric energy conversion device;
f1- length direction; f2- thickness direction; f3- height direction.

### DETAILED DESCRIPTION

To clarify the purposes, technical solutions, and advantages of this application, exemplary embodiments of this application will be described clearly and completely in conjunction with the accompanying drawings in the exemplary embodiments of this application. Evidently, the exemplary embodiments described represent only part of the embodiments of this application, rather than all of the embodiments. That is, the specific embodiments described herein are only used to explain this application and are not intended to limit this application.

It may be noted that brief explanation of terms in this application is only for the convenience of understanding the embodiments described below, and is not intended to limit the embodiments of this application. Unless otherwise defined, all technical and scientific terms used herein have the same meanings as commonly understood by those skilled in the art to which this application pertains. The terms used in the specification of this application are only for the purpose of describing specific embodiments and are not intended to limit the scope of this application.

In the description of this application, it may be understood that terms such as "central," "up," "down," "front," "rear," "left," "right," "vertical," "horizontal," "top," "bottom," "inner," and "outer" refer to orientations or positions as described or as shown in the drawings under discussion, and are only for the convenience of describing this application and simplifying the description, and do not indicate or imply that the device or element referred to must have a particular orientation, or be constructed and operated in a particular orientation. Thus, these terms cannot be understood as limitations on this application.

Terms such as "first" and "second" used in this application may be employed to describe various elements, but these elements are not limited by these terms. These terms are only used to distinguish a first element from another element. For example, without departing from the scope of this application, a first side tab may be referred to as a second side tab, and similarly, the second side tab may be referred to as the first side tab. The first side tab and the second side tab are both side tabs, but they are not side tabs on the same side.

In addition, the terms "first" and "second" are used only for purposes of description and cannot be construed as indicating or implying relative importance or significance or implying the number of indicated technical features. Thus, the feature defined with "first" and "second" may include one or more features. In the description of this application, the term "a plurality of" means two or more than two, unless specified otherwise.

In the description of this application, it may be noted that unless specified and limited otherwise, terms such as "mounted," "connected," and "coupled" are interpreted broadly, and may be, for example, fixed connections, detachable connections, or integral connections; may also be mechanical or electrical connections; may also be direct connections or indirect connections via intervening structures; may also be inner connection of two elements. For those skilled in the art, the specific meanings of the above terms in this application can be understood in specific situations.

In the description of this application, it may be noted that singular forms such as "a," "one," and "said/the" may also include plural forms, unless clearly indicated otherwise in the context. It may also be understood that terms "comprising/including" or "having" denote the existence of the stated features, entities, steps, operations, components, parts, or combinations thereof, but do not exclude the possibility of the existence or addition of one or more other features, entities, steps, operations, components, parts, or combinations thereof.

In addition, the term "and/or" used in this specification includes any and all combinations of the relevant listed items. For example, A and/or B may denote the sole existence of A, the coexistence of A and B, and the sole existence of B. That is, the term "and/or" used in this specification includes any and all combinations of the relevant listed items.

Due to the strong temporal and spatial characteristics of energy sources needed by humans, the rational use of energy sources and improvement of energy utilization rate requires a medium or an apparatus to store one form of energy, either in the same form or through conversion into another form, for subsequent release in a specific energy form based on future application needs. It is widely recognized that the main way to generate green electricity currently involves development of green energy sources such as photovoltaics and wind power to replace fossil fuels.

At present, the generation of green electricity generally relies on photovoltaics, wind power, water potential, etc., but wind and solar energy are characterized by pronounced intermittency and significant fluctuations, which may cause instability in the power grid, insufficient electricity during peak periods, and too much electricity during off-peak periods. Unstable voltage may also cause damage to electricity. Consequently, due to insufficient electricity demand or insufficient grid capacity, problems such as "wind and solar power curtailment" may occur. To solve these problems, energy storage is necessary, that is, converting electric energy into other forms of energy storage through physical or chemical means, and converting it back into electric energy for release when needed. Simply put, energy storage functions like a large "power bank" that stores electric energy when there is sufficient photovoltaic or wind power, and releases the stored electricity when needed.

Taking electrochemical energy storage as an example, embodiments of this application provide an energy storage device, in which a set of energy storage batteries are provided. The energy storage device mainly uses chemical elements in the batteries as energy storage media, and charging and discharging processes are accompanied by chemical reactions or changes of the energy storage media. Simply put, electric energy generated by wind and solar energy is stored in chemical batteries, and the stored electric energy is released for use during peak external electricity demand periods, or transferred to places experiencing power shortages.

At present, energy storage (i.e., power storage) has a wide range of application scenarios, including power-generation-side energy storage, grid-side energy storage, grid-connected renewable energy storage, and user-side energy storage. The corresponding types of energy storage devices include:
① large-scale container-type energy storage devices applied in grid-side energy storage scenarios, which may serve as high-quality sources for active and reactive power regulation in the grid, achieve load matching of electric energy in time and space, enhance renewable energy accommodation capability, and play a significant role in the backup of the grid system, relief of electricity supply pressure under peak loads, peak shaving and frequency regulation;
② medium-to-small-scale cabinet-type energy storage devices applied in user-side industrial and commercial energy storage scenarios (banks, shopping malls, etc.), as well as small-scale box-type energy storage devices applied in user-side household energy storage scenarios, which mainly operate in a "peak shaving and valley filling" mode. Due to the significant price difference in electricity bills during peak and off-peak periods based on electricity demand, users having energy storage devices usually charge their energy storage cabinets/boxes during low electricity price periods to reduce costs, and release the electricity stored in the energy storage devices for use during high electricity price periods to reduce electricity bills. In addition, in remote regions and regions prone to natural disasters such as earthquakes and hurricanes, the presence of household energy storage devices provides users with backup power sources for themselves and the power grid, eliminating the inconvenience caused by frequent power outages due to disasters or other reasons.

During production of energy storage devices, the assembly process has crucial influence on the quality, cost, and performance of electrode core products. As an important connecting structure between a roll core and a terminal on an end cover, a tab mainly serves to collect and transmit electrons. A design of a protruding height of the tab relative to the electrode core significantly influences cost and internal resistance of the electrode core. On the premise of ensuring the assembly process, the height of the tab is reduced as much as possible, which is beneficial for lowering foil material costs of the electrode core and the internal resistance of the tab, and then improving the electrode core performance.

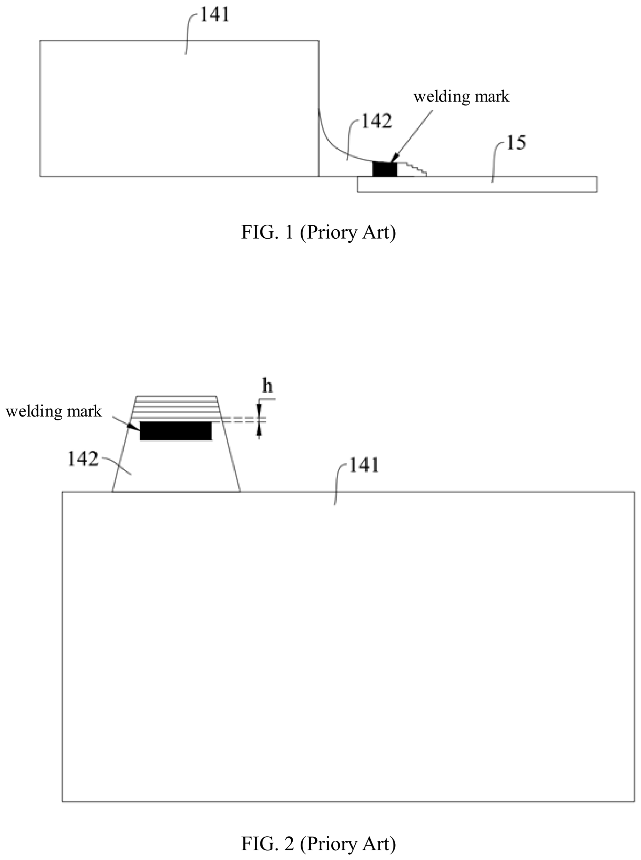

In the related art, to ensure the battery performance of the energy storage device, an adapter is typically employed to achieve electrical connection between the tab of the electrode core and the terminal of the end cover. In a process of manufacturing the electrode core in the related art, the adapter is usually disposed on one side of a plurality of layers of tabs of the electrode core, and the plurality of layers of tabs are pressed against the adapter and then welded to the adapter, thereby completing the assembly of the adapter and the plurality of layers of tabs. Specifically, as shown in FIG. 1, a plurality of layers of tabs 142 are concentrated on one side of an electrode core body 141, and may be connected to an adapter 15 by welding (e.g., ultrasonic welding).

As the heights of individual layers of tabs remain identical after die-cutting, downward pressure on the plurality of layers of tabs during welding may cause the plurality of layers of tabs to form a gradient, increasing from an upper layer to a lower layer, as shown in FIG. 2. To ensure that a welding mark can completely fall on each tab, a certain distance h is reserved between an edge of the welding mark and an edge of the uppermost tab layer in a direction where the tab protrudes relative to the electrode core body. That is, the uppermost tab layer after being bent must reserve a sufficient welding area for welding to ensure the welding quality of the tab. Consequently, the height of the required tab is higher, which is detrimental to reducing the foil material costs of the electrode core and the internal resistance of the tabs.

To overcome the above problems, the applicant has found through research that by pressing the two side tabs of the plurality of layers of tabs toward the central tab respectively, and attaching and welding the tabs on one side of two sides of the plurality of layers of tabs to the adapter, it can reduce a bending degree of the tab farthest from the adapter. As a result, the tab farthest from the adapter has a sufficient welding area after being bent, and at the same time the heights of individual layers of tabs are reduced, especially the height of the tab farthest from the adapter, thereby reducing the foil material costs of the electrode core and the internal resistance of the tabs, to improve the electrode core performance.

Additionally, the applicant has also found through research that after welding the tab and the adapter, the tab needs to be bent to position the adapter atop the electrode core body, to facilitate welding between the adapter and the terminal on the end cover. During this process, the tab adjacent to the adapter needs to be bent in a reverse direction, so that the tab adjacent to the adapter are bent twice in opposite directions, which makes the tab be easily strained and torn.

In view of the above, the embodiments of this application provide an energy storage device that can reduce foil material costs of an electrode core and internal resistance of a tab while avoiding straining or tearing the tab.

Technical solutions in some embodiments of this application will be described clearly and completely in conjunction with the accompanying drawings in some embodiments of this application. Evidently, the embodiments described represent only part of the embodiments of this application, rather than all of the embodiments. Based on the embodiments in this application, all other embodiments obtained by those skilled in the art without creative effort fall within the protection scope of this application.

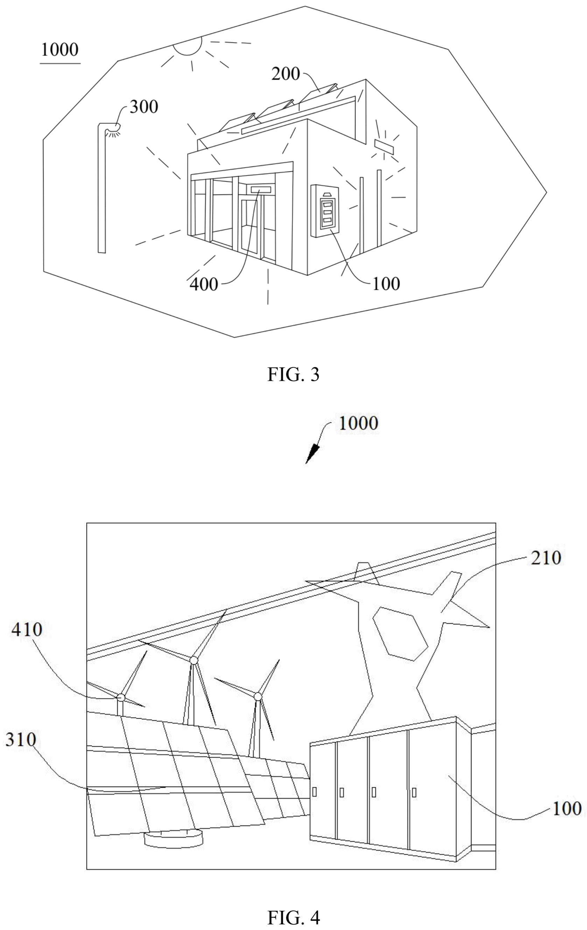

Referring to FIG. 3, it is a structural schematic view of an energy storage system according to an embodiment of this application as a household energy storage system. The embodiment depicted in FIG. 3 of this application is illustrated using a household energy storage scenario in user-side energy storage as an example, and an energy storage device in the embodiment of this application is not limited to the household energy storage scenario.

As shown in FIG. 3, the energy storage system 1000 in the embodiment of this application includes an energy storage device 100, an electric energy conversion device 200 (a photovoltaic panel), a first user load 300 (a street lamp), and a second user load 400 (e.g., a household appliance such as an air conditioner). The energy storage device 100 is a small-scale energy storage box that may be mounted on an outdoor wall by wall mounting. Specifically, the photovoltaic panel may convert solar energy into electric energy during low electricity price periods. The energy storage device 100 is configured to store the electric energy and supply it to the street lamp and the household appliance during high electricity price periods, or to provide power during grid outages/blackouts.

Referring to FIG. 4, it is an exemplary structural schematic view of an energy storage system according to another embodiment of this application. The embodiment depicted in FIG. 4 of this application is illustrated using a power generation/distribution-side shared energy storage scenario as an example, and an energy storage device 100 of this application is not limited to the power generation/distribution-side energy storage scenario.

As shown in FIG. 4, an energy storage system 1000 according to the embodiment of this application may include an energy storage device 100, a high-voltage cable 210, a first electric energy conversion device 310, and a second electric energy conversion device 410. During power generation, the first electric energy conversion device 310 and the second electric energy conversion device 410 are configured to convert another form of energy into electric energy, connect to the high-voltage cable 210, and supply power to a power consumption side of a distribution network. When an electrical load is low, and the first electric energy conversion device 310 and the second electric energy conversion device 410 generate excess electricity, the excess electricity is stored in the energy storage device 100, which may reduce wind and solar power curtailment rates and improve problems related to electricity generation and accommodation of new energy sources. When the electrical load is high, the power grid issues an instruction to transfer electricity stored in the energy storage device 100 in conjunction with the high-voltage cable 210 in a grid-connected mode, to supply the electricity to the power consumption side. Various services may be provided for operation of the power grid, such as peak shaving, frequency regulation, and backup, to fully leverage the peak shaving capability of the power grid, facilitate peak shaving and valley filling of the power grid, and alleviate the power supply pressure of the power grid.

Optionally, the first electric energy conversion device 310 and the second electric energy conversion device 410 may convert at least one of solar energy, optical energy, wind energy, thermal energy, tidal energy, biomass energy, and mechanical energy into electric energy. In this application, a plurality of energy storage devices 100 may be provided and connected in series or in parallel. The plurality of energy storage devices 100 are supported and electrically connected using an isolation plate (not shown). In this embodiment, "a plurality of" means two or more than two. An energy storage box may be further provided outside the energy storage device 100 to accommodate the energy storage device 100.

Optionally, the energy storage device 100 may include but is not limited to a single battery, a battery module, a battery pack, a battery system, and the like. The actual application form of the energy storage device 100 in the embodiments of this application may be but is not limited to the listed products, and may also be in other application forms. The embodiments of this application do not impose strict limitations on the application form of the energy storage device 100.

The embodiments of this application are illustrated by using an example where the energy storage device 100 is a single battery.

Optionally, the energy storage device 100 may be a polygonal battery, a cylindrical battery, , and the like, which may be selected according to actual situations and is not specifically limited in this embodiment. It is evident that the energy storage device 100 in this application is not limited to a battery with a specific shape, but rather the energy storage device 100 exhibits diverse and flexible shapes.

Among these, the polygonal battery includes a square battery, a pentagonal battery, a hexagonal battery, and so on.

To facilitate explanation of the energy storage device 100 according to the embodiments of this application, by way of example rather than limitation, technical solutions of this application will be elaborated in detail below using an example where the energy storage device 100 is a square battery.

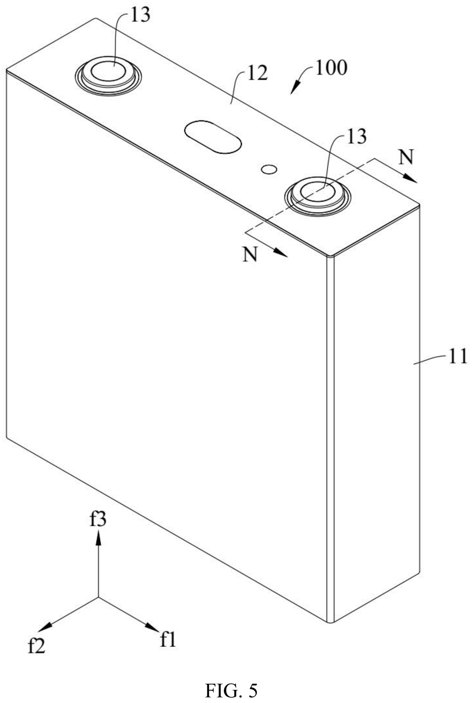

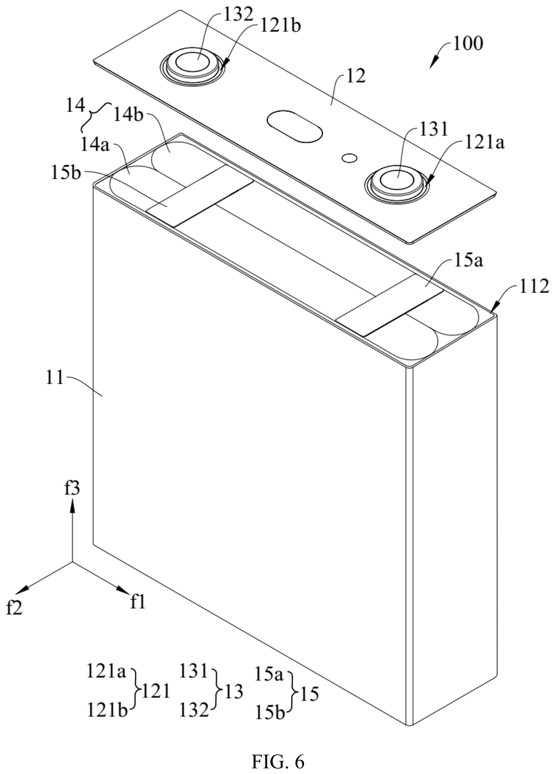

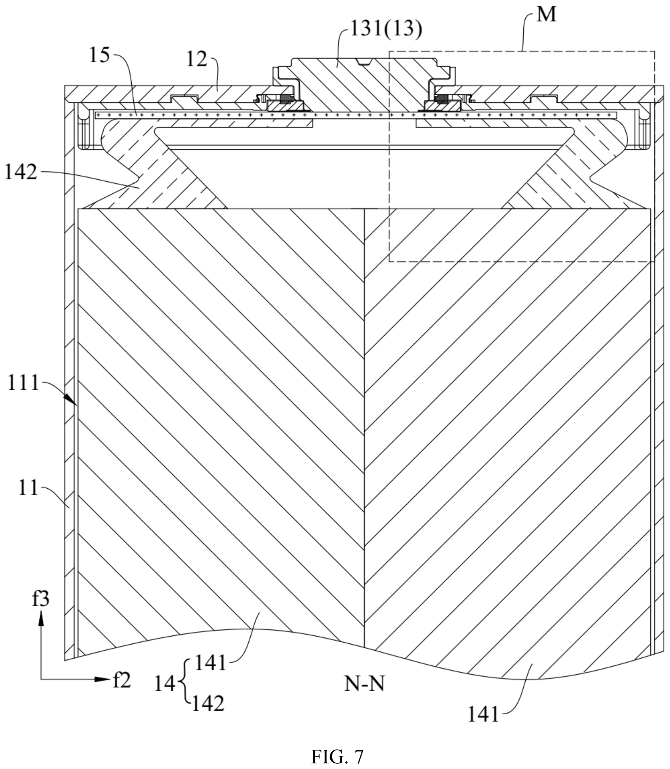

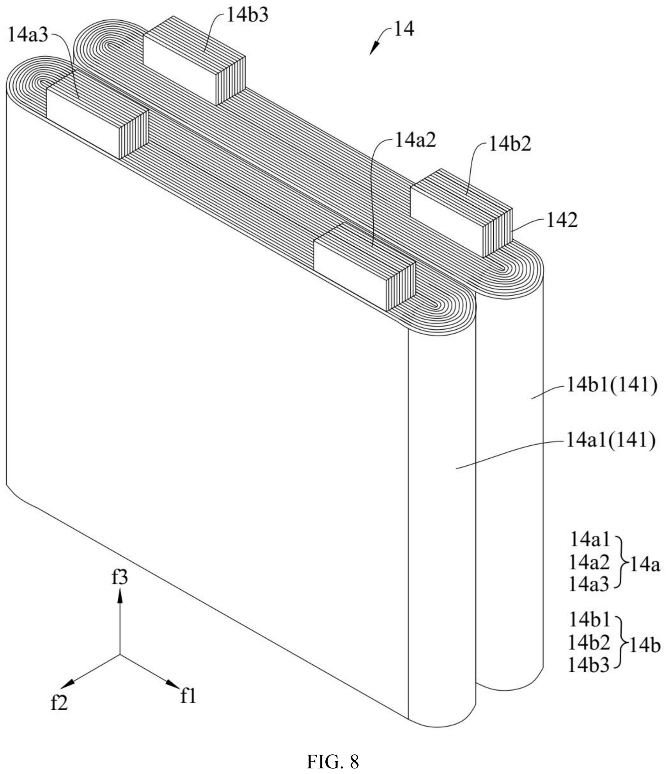

Referring to FIGS. 5-8, FIG. 5 shows that the energy storage device in this application is a square battery; FIG. 6 is an exploded schematic view of the energy storage device in a specific embodiment; FIG. 7 is a sectional view of the energy storage device along an N-N direction in FIG. 5 in a specific embodiment; FIG. 8 is a structural schematic view of two electrode cores arranged along their thickness direction.

As shown in FIGS. 5-8, the energy storage device 100 according to the embodiments of this application includes a housing 11, an end cover assembly 12, a terminal 13, an electrode core 14, and an adapter 15. The housing 11 has an inner cavity 111 and an opening 112 in communication with the inner cavity 111. The end cover assembly 12 is sealed at the opening 112 and has a terminal hole 12a penetrating the end cover assembly. The terminal 13 passes through the terminal hole 12a. The electrode core 14 is disposed in the inner cavity 111, and the electrode core 14 has a length direction f1, a thickness direction f2, and a height direction f3.

In this application, the electrode core 14 includes an electrode core body 141 and a plurality of layers of tabs 142 disposed on the electrode core body 141. The plurality of layers of tabs 142 are spaced along the thickness direction f2 of the electrode core 14. The adapter 15 is electrically connected to the terminal 13 and the plurality of layers of tabs 142 respectively, to achieve electrical connection between the electrode core 14 and the terminal 13, thereby facilitating current stored in the electrode core 14 to be led out through the terminal 13, or facilitating external current to be introduced into the electrode core 14 through the terminal 13 and stored in the electrode core 14.

Optionally, the housing 11 is a metal housing, such as an aluminum housing. Certainly, the housing 11 may also be made of other materials. The end cover assembly 12 may include at least an end cover plate. In other embodiments, the end cover assembly 12 may also include lower plastic and/or upper plastic.

Optionally, the electrode core 14 may be formed by stacking a plurality of positive electrode sheets, a plurality of separators, and a plurality of negative electrode sheets, or by winding the positive electrode sheets, separators, and negative electrode sheets, which may be selected according to actual situations and will not be specifically limited in this embodiment.

In some embodiments, there may be a plurality of electrode cores 14, for example, two, three, four, five, six, or more. The plurality of electrode cores 14 may be connected in parallel or in series.

It may be noted that FIG. 6 merely aims to provide a schematic description of the connection relationship between the housing 11 and the end cover assembly 12, and is not intended to impose specific limitations on the connection position, specific structure, and quantity of each component. The structure illustrated in the embodiments of this application does not constitute a specific limitation on the energy storage device 100. In other embodiments of this application, the energy storage device 100 may include more or fewer components than those shown in FIG. 6, or combine certain components, split certain components, or adopt different component arrangements. The components shown in FIG. 6 may be implemented in hardware, software, or a combination of software and hardware.

As shown in FIGS. 6, 7, and 8, the terminal hole 12a on the end cover assembly 12 may include a first terminal hole 121a and a second terminal hole 121b. The terminal 13 may include a positive terminal 131 and a negative terminal 132, the positive terminal 131 passes through the first terminal hole 121a, and the negative terminal 132 passes through the second terminal hole 121b. The electrode core 14 may include a first electrode core 14a and a second electrode core 14b. The first electrode core 14a includes a first electrode core body 14a1, and a first positive tab 14a2 and a first negative tab 14a3 that are disposed on the first electrode core body 14a1. The second electrode core 14b includes a second electrode core body 14b1, and a second positive tab 14b2 and a second negative tab 14b3 that are disposed on the second electrode core body 14b1. The first electrode core body 14a1 and the second electrode core body 14b1 each include the electrode core body 141 described above. The first positive tab 14a2, the first negative tab 14a3, the second positive tab 14b2, and the second negative tab 14b3 each include the plurality of layers of tabs 142 described above. The adapter 15 may include a first adapter component 15a and a second adapter component 15b. The first adapter component 15a is electrically connected to the positive terminal 131, the first positive tab 14a2, and the second positive tab 14b2 respectively. The second adapter component 15b is electrically connected to the negative terminal 132, the first negative tab 14a3, and the second negative tab 14b3 respectively. Consequently, current may be led out or in through the positive terminal 131 and the negative terminal 132.

As shown in FIG. 8, the first electrode core 14a and the second electrode core 14b are arranged along the thickness direction f2 of the electrode core 14. Along the thickness direction f2 of the electrode core 14, the first positive tab 14a2 is opposite to the second positive tab 14b2, and the first negative tab 14a3 is opposite to the second negative tab 14b3; and/or along the thickness direction f2 of the electrode core 14, the first positive tab 14a2 and the first negative tab 14a3 are arranged on a side of the first electrode core body 14a1 facing away from the second electrode core body 14b1, and the second positive tab 14b2 and the second negative tab 14b3 are arranged on a side of the second electrode core body 14b1 facing away from the first electrode core body 14a1.

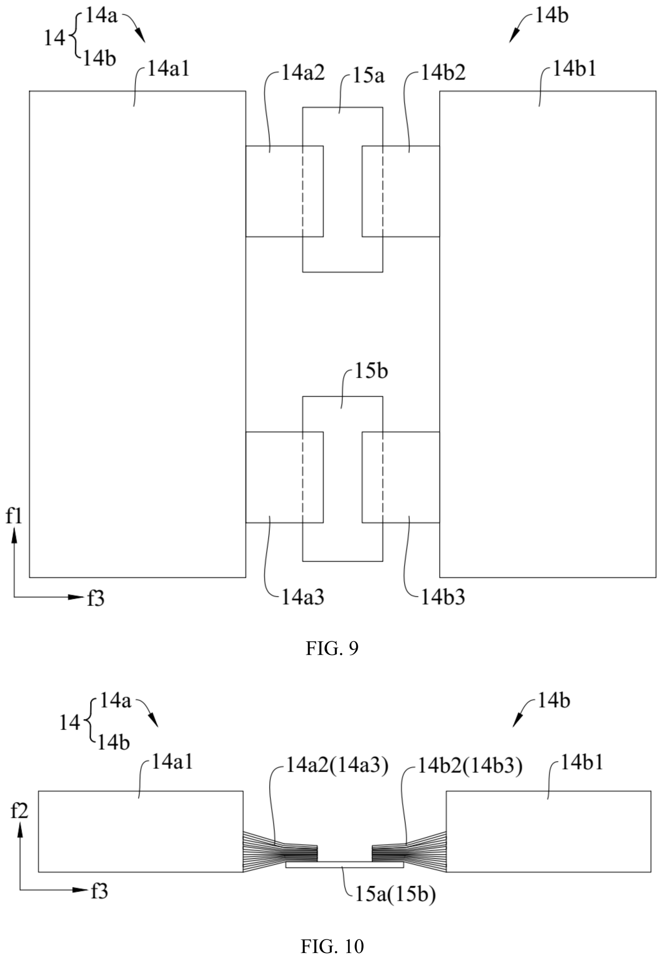

It may be understood that during an assembly process of the electrode core 14, as shown in FIG. 9, the first electrode core 14a and the second electrode core 14b are arranged along the height direction f3 of the electrode core 14, and as shown in FIG. 10, in the height direction f3 of the electrode core 14, the first negative tab 14a3 of the first electrode core 14a and the second negative tab 14b3 of the second electrode core 14b may be oppositely arranged, and the first positive tab 14a2 of the first electrode core 14a and the second positive tab 14b2 of the second electrode core 14b may be oppositely arranged. Thus, the welding of the first adapter component 15a with the first positive tab 14a2 and the second positive tab 14b2, and the welding of the second adapter component 15b with the first negative tab 14a3 and the second negative tab 14b3 may be facilitated, which is conductive to achieving the welding of the first adapter component 15a with the first positive tab 14a2 and the second positive tab 14b2, and quickly achieving the welding of the second adapter component 15b with the first negative tab 14a3 and the second negative tab 14b3, and saving welding time.

In addition, as shown in FIG. 8, since the first positive tab 14a2 of the first electrode core 14a and the second positive tab 14b2 of the second electrode core 14b are both located outside the electrode core 14, and the first negative tab 14a3 of the first electrode core 14a and the second negative tab 14b3 of the second electrode core 14b are also located outside the electrode core 14, when the first electrode core 14a and the second electrode core 14b are arranged along the thickness direction f2 of the electrode core 14, positions of the first positive tab 14a2 and the second positive tab 14b2 are far apart, and positions of the first negative tab 14a3 and the second negative tab 14b3 are also far apart, to prevent a short circuit caused by overlapping between the first positive tab 14a2 and the second positive tab 14b2. Moreover, in the event of a short circuit caused by overlapping between the first negative tab 14a3 and the second negative tab 14b3, both the first positive tab 14a2 and the second positive tab 14b2 may have a relatively large connection area with the first adapter component 15a, and both the first negative tab 14a3 and the second negative tab 14b3 may have a relatively large connection area with the second adapter component 15b, which is beneficial for enhancing the connection strength between the electrode core 14 and the adapter 15, and avoiding conductive failure caused by low connection strength between the electrode core 14 and the adapter 15.

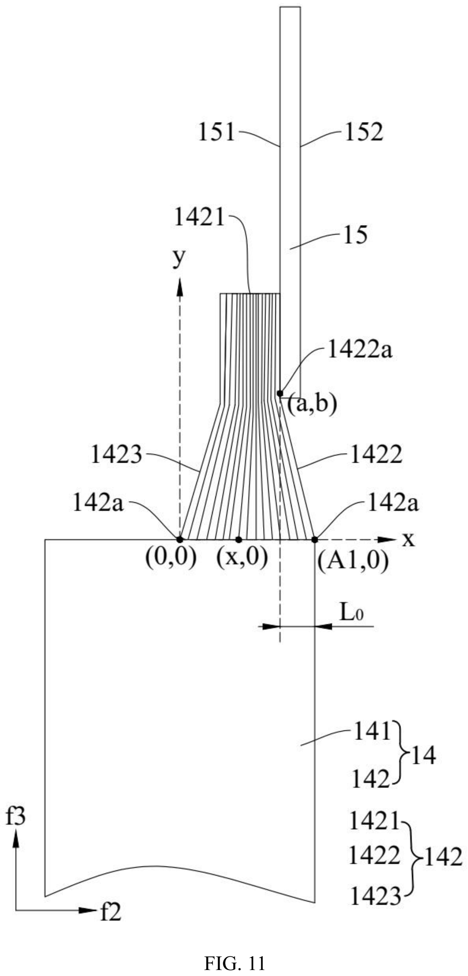

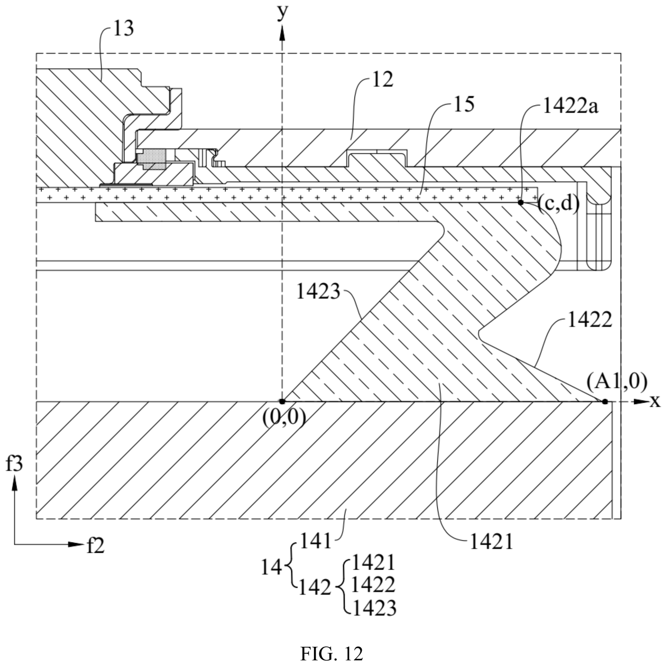

Referring to FIGS. 11 and 12, the plurality of layers of tabs 142 may include a central tab 1421, a first side tab 1422, and a second side tab 1423. The first side tab 1422 and the second side tab 1423 are located on two sides of the central tab 1421 in the thickness direction f2 of the electrode core 14 respectively, and the first side tab 1422 and the second side tab 1423 are bent toward the central tab 1421 respectively. The adapter 15 has a first side surface 151 and a second side surface 152 that are opposite to each other. The first side surface 151 is electrically connected to the first side tab 1422, and the second side surface 152 is electrically connected to the terminal 13.

In the above solution, the first side tab 1422 and the second side tab 1423 on two sides of the central tab 1421 are respectively bent and pressed toward the central tab 1421, and then the first side surface 151 of the adapter 15 is attached and electrically connected to the first side tab 1422, which can reduce a bending degree of the second side tab 1423, compared with merely bending and pressing the second side tab 1423 toward the first side tab 1422. Consequently, while the second side tab 1423 has a sufficient welding area after being bent (e.g., on the premise of ensuring that the distance h between the edge of the welding mark and an edge of the second side tab 1423 in a direction where the tab 142 protrudes relative to the electrode core body 141 maintains unchanged), the height of each layer of tab 142, especially the height of the second side tab 1423, may be reduced, to lower the foil material costs of the electrode core and reduce the internal resistance of the tabs 142, thereby improving the electrode core performance.

Optionally, the quantities of the central tab 1421, the first side tab 1422, and the second side tab 1423 may be identical or different. There may be one central tab 1421 or a plurality of central tabs 1421. There may be one first side tab 1422 or a plurality of first side tabs 1422. There may be one second side tab 1423 or a plurality of second side tab 1423.

In this application, the plurality of layers of tabs 142 may be bent from a first state to a second state. The first state is configured to connect (e.g., weld) the first side surface 151 to the first side tab 1422, and the plurality of layers of tabs 142 are not bent and the first side surface 151 is not oriented toward the electrode core body 141 (as shown in FIG. 11). The second state is configured to bend the plurality of layers of tabs 142 to orient the first side surface 151 toward the electrode core body 141 (as shown in FIG. 12).

In this application, each tab 142 has a root 142a connected to the electrode core body 141, and the first side tab 1422 has a connection position 1422a for connection with the adapter 15, for example a welding point where the first side tab 1422 is welded to the adapter 15.

To facilitate determining a distance L₀ between the connection position 1422a of the first side tab 1422 and the root 142a of the first side tab 1422 in the thickness direction f2 of the electrode core 14 after the first side tab 1422 is bent toward the central tab 1421, as shown in FIGS. 11-13, embodiments of this application exemplarily establish a Cartesian coordinate system with the root 142a of the second side tab 1423 as an origin, the thickness direction f2 of the electrode core 14 as an x-axis, and an extension direction of the tab 142 as a y-axis. Accordingly, a coordinate of the root 142a of any tab 142 is (x, 0), and a coordinate of the root 142a of the first side tab 1422 is (A1, 0), in which x is between 0 and A1, i.e., 0 ≤ x ≤ A1. In other words, x does not exceed half of a thickness of the electrode core body 141. When the plurality of layers of tabs 142 are not bent and the first side surface 151 is not oriented toward the electrode core 14, that is, when the plurality of layers of tabs 142 are in the first state, a coordinate of the connection position 1422a is (a, b). When the plurality of layers of tabs 142 are bent and the first side surface 151 is oriented toward the electrode core 14, that is, when the plurality of layers of tabs 142 are in the second state, the coordinate of the connection position 1422a is (c, d). Among these, L₀ = A1-a_{∘}

When the plurality of layers of tabs 142 are not bent and the first side surface 151 is not oriented toward the electrode core 14, a distance between the connection position 1422a and the root 142a of any tab 142 is L₁=((a-x)²+b²)^{1/2}. When the plurality of layers of tabs 142 are bent and the first side surface is oriented toward the electrode core 14, a distance between the connection position 1422a and the root 142a of any tab 142 is L₂={(c-c)²+d²}^{1/2}. When L₁>L₂, excessive pulling of the first side tab 1422 may be prevented when the plurality of layers of tabs 142 are bent to orient the first side surface 151 toward the electrode core 14, thereby avoiding excessive bending of the first side tab 1422, which can in turn avoid straining or tearing the first side tab 1422 when the plurality of layers of tabs 142 need to be bent to orient the first side surface 151 of the adapter 15 toward the electrode core 14, and ensure the conductivity reliability of the tab 142.

That is, the energy storage device 100 satisfies the following relationship: L₁²-L₂²=((ax)²+b²)-{(c-x)²+d²} >0, in which b, c, d, and x may all be obtained based on actual electrode core tests. By calculating the above relationship, the range of "a" may be calculated, and thus the range of "L₀" may be determined. That is, a range of a distance between the connection position 1422a of the first side tab 1422 and the root 142a of the first side tab 1422 in the thickness direction f2 of the electrode core 14 after the first side tab 1422 is bent toward the central tab 1421 may be determined, to determine a bending degree of the first side tab 1422 toward the central tab 1421 and avoid excessive bending of the first side tab 1422, thereby avoiding straining or tearing the first side tab 1422 when the plurality of layers of tabs 142 need to be bent to orient the first side surface of the adapter 15 toward the electrode core, and ensuring the conductivity reliability of the tab 142.

The electrode core 14 inevitably expands during charging and discharging processes, and an expansion rate of the electrode core 14 in the thickness direction f2 is k. When the plurality of layers of tabs 142 are bent to orient the first side surface toward the electrode core 14, and the electrode core 14 expands, the coordinate of the root 142a of any tab 142 is ((1+k)x, 0), and a distance between the connection position 1422a and the root 142a of any tab 142 is L₃={(c-(1+k)x)²+d²}^{1/2}. When L1>L3, that is, when the energy storage device 100 satisfies the following relationship: L₁²-L₃²=((a-x)²+b²)-{(c-(1+k)x)²+d²} >0, excessive pulling of the first side tab 1422 may be prevented when the electrode core 14 expands, thereby avoiding straining or tearing the first side tab 1422 when the electrode core 14 expands, and ensuring the conductivity reliability of the tab 142.

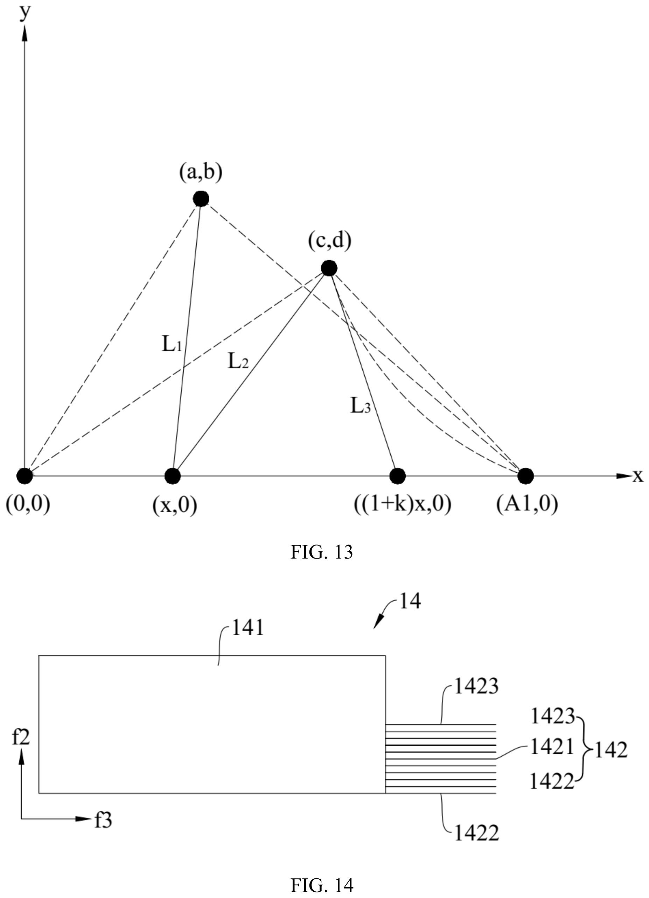

As a first optional implementation, as shown in FIG. 14, when the first side tab 1422 and the second side tab 1423 are not bent toward the central tab 1421, and the first side tab 1422 is not connected to the first side surface, the height of each tab 142 protruding relative to the electrode core 14 is equal. Thus, the height of each tab 142 protruding relative to the electrode core 14 can keep identical, eliminating the need for special die-cutting of the tab 142, and simplifying the die-cutting process for the tab 142.

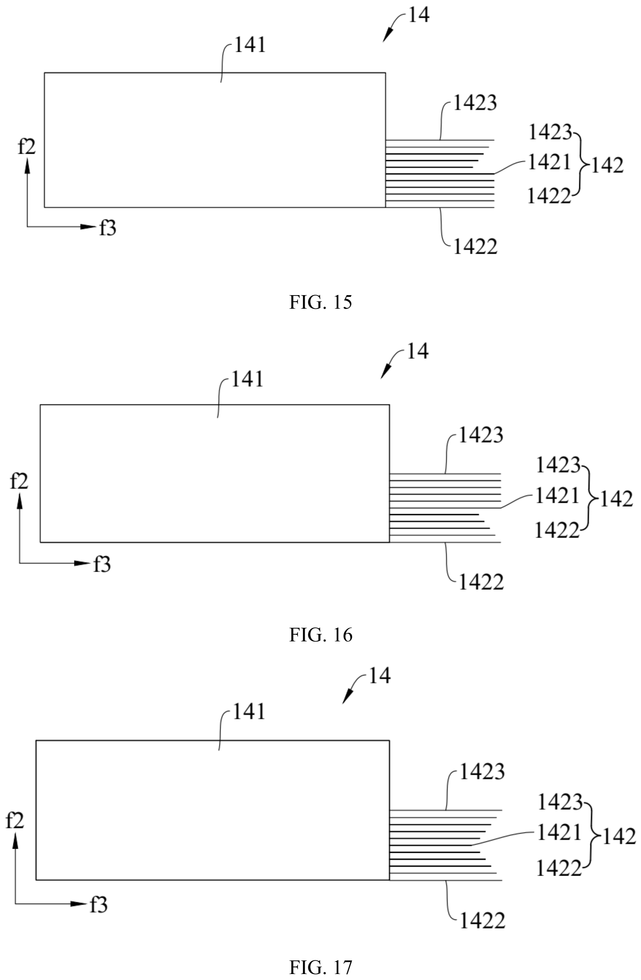

As a second optional implementation, as shown in FIG. 15, when neither the first side tab 1422 nor the second side tab 1423 is bent toward the central tab 1421, and the first side tab 1422 is not connected to the first side surface, a height of the first side tab 1422 protruding relative to the electrode core body 141 is greater than a height of the central tab 1421 protruding relative to the electrode core body 141. After the first side tab 1422 and the second side tab 1423 are bent and pressed toward the central tab 1421 respectively, that is, after the plurality of layers of tabs are pressed and connected, an end of the central tab 1421 away from the electrode core body 141 is flush with an end of the first side tab 1422 away from the electrode core body 141. Compared to a configuration where the height of each tab 142 is equal, the height of the central tab 1421 may be reduced, which is beneficial for reducing the foil material costs of the electrode core and the internal resistance of the tabs, and enhancing the electrode core performance.

As a third optional implementation, as shown in FIG. 16, when neither the first side tab 1422 nor the second side tab 1423 is bent toward the central tab 1421, and the first side tab 1422 is not connected to the first side surface, a height of the second side tab 1423 protruding relative to the electrode core body 141 is greater than a height of the central tab 1421 protruding relative to the electrode core body 141. After the first side tab 1422 and the second side tab 1423 are bent and pressed toward the central tab 1421 respectively, that is, after the plurality of layers of tabs are pressed and connected, an end of the central tab 1421 away from the electrode core body 141 is flush with an end of the second side tab 1423 away from the electrode core 14. Compared to the configuration where the height of each tab 142 is equal, the height of the central tab 1421 may be reduced, which is beneficial for reducing the foil material costs of the electrode core and the internal resistance of the tabs 142, and enhancing the electrode core performance.

As a fourth optional implementation, as shown in FIG. 17, when neither the first side tab 1422 nor the second side tab 1423 is bent toward the central tab 1421, and the first side tab 1422 is not connected to the first side surface, a height of the first side tab 1422 protruding relative to the electrode core body 141 is greater than a height of the central tab 1421 protruding relative to the electrode core body 141, and a height of the second side tab 1423 protruding relative to the electrode core body 141 is greater than the height of the central tab 1421 protruding relative to the electrode core body 141. After the first side tab 1422 and the second side tab 1423 are bent and pressed toward the central tab 1421 respectively, that is, after the plurality of layers of tabs are pressed and connected, respective ends of the central tab 1421, the first side tab 1422, and the second side tab 1423 away from the electrode core body 141 are flush. Compared to the configuration where the height of each tab 142 is equal, at least the height of the central tab 1421 may be reduced, which is beneficial for reducing the foil material costs of the electrode core and the internal resistance of the tabs 142, and enhancing the electrode core performance.

In some embodiments, when neither the first side tab 1422 nor the second side tab 1423 is bent toward the central tab 1421, and the first side tab 1422 is not connected to the first side surface, the height of the tab 142 protruding relative to the electrode core body 141 first decreases and then increases along the thickness direction f2 of the electrode core 14. That is, the height of the tab 142 protruding relative to the electrode core body 141 gradually increases in a direction where the central tab 1421 points toward the first side tab 1422, and gradually increases in a direction where the central tab 1421 points toward the second side tab 1423. In this way, after the first side tab 1422 and the second side tab 1423 are bent and pressed toward the central tab 1421 respectively, that is, after the plurality of layers of tabs are pressed and connected, respective ends of individual tab 142 layers away from the electrode core 14 may be flush, which can not only improve the aesthetic degree and fixing firmness of the tabs, but also reduce the heights of the tabs 142 compared to equal heights of individual tabs 142, thereby reducing the foil material costs of the electrode core and the internal resistance of the tabs 142, and enhancing the electrode core performance.

In some embodiments, when neither the first side tab 1422 nor the second side tab 1423 is bent toward the central tab 1421, and the first side tab 1422 is not connected to the first side surface, spacing between any two adjacent layers of tabs 142 is equal, which allows individual layers of tabs 142 to be arranged at equal intervals, thereby ensuring the charging and discharging performance and the overall performance of the electrode core 14.

To improve the uniformity of the plurality of layers of tabs 142 after pressing, in some embodiments, when the first side tab 1422 is not connected to the first side surface, a height difference between any two adjacent layers of tabs 142 protruding relative to the electrode core body 141 is equal, that is, heights of the plurality of layers of tabs 142 protruding relative to the electrode core body 141 are set in an arithmetic progression. Thus, the plurality of layers of tabs 142 can be neater after pressing, and the arithmetic progression of heights of the plurality of layers of tabs 142 protruding relative to the electrode core body 141 can create a regular variation, to facilitate the die-cutting of individual layers of tabs 142 and achieve precise control over the heights of individual tab 142 layers.

Various technical features of the above embodiments may be combined in any manner. For the sake of simplicity of the description, not all possible combinations of the various technical features in the above embodiments have been described. However, as long as the combinations of these technical features do not involve any contradiction, they should be deemed to fall within the scope of this specification.

In addition, the above embodiments merely illustrate several implementations of this application, which are described in a relatively specific and detailed manner, but should not be construed as limitation on the patent scope of this application. It should be noted that, for those skilled in the art, several modifications and improvements can be made without departing from the concept of this application and fall within the protection scope of this application. Therefore, the content of this specification should not be construed as limitation on this application, and the protection scope of this application should be subject to the appended claims.

## Claims

1. An energy storage system (100), comprising:
a housing (11), having an inner cavity (111) and an opening (112) in communication with the inner cavity (111);
an end cover assembly (12), arranged at the opening (112) and sealing the opening (112), the end cover assembly (12) having a terminal hole (12a) penetrating the end cover assembly (12);
a terminal (13), passing through the terminal hole (12a);
an electrode core (14), disposed in the inner cavity (111) and comprising an electrode core body (141) and a plurality of layers of tabs (142) disposed on the electrode core body (141), wherein the plurality of layers of tabs (142) are spaced along a thickness direction of the electrode core (14); the plurality of layers of tabs (142) comprise a central tab (1421), a first side tab (1422), and a second side tab (1423); the first side tab (1422) and the second side tab (1423) are respectively located on two sides of the central tab (1421) in the thickness direction of the electrode core (14); and each of the first side tab (1422) and the second side tab (1423) is bent toward the central tab (1421); and
an adapter (15), having a first side surface (151) and a second side surface (152) opposite to each other, wherein the first side surface (151) is electrically connected to the first side tab (1422), and the second side surface (152) is electrically connected to the terminal (13),
wherein the plurality of layers of tabs (142) are bendable from a first state to a second state, the first state is configured as a state where the plurality of layers of tabs (142) are not bent and the first side surface (151) is not oriented toward the electrode core body (141), and the second state is configured as a state where the plurality of layers of tabs (142) are bent and the first side surface (151) is oriented toward the electrode core body (141);
wherein each tab (142) has a root (142a) connected to the electrode core body (141), and the first side tab (1422) has a connection position for connection with the adapter (15); wherein a Cartesian coordinate system is established with the root (142a) of the second side tab (1423) as an origin, the thickness direction of the electrode core (14) as an x-axis, and an extension direction of the tab (142) as a y-axis; a coordinate of the root (142a) of any tab (142) is (x, 0); when the plurality of layers of tabs (142) are in the first state, a coordinate of the connection position is (a, b); and when the plurality of layers of tabs (142) are in the second state, a coordinate of the connection position is (c, d),
wherein $\left({\left(a-x\right)}^{2}+{b}^{2}\right) - \left\{{\left(c-x\right)}^{2}+{d}^{2}\right\} > 0 .$

2. The energy storage system (100) according to claim 1, wherein an expansion rate of the electrode core (14) in the thickness direction of the electrode core (14) is k, and the energy storage system (100) satisfies a following relationship: $\left({\left(a-x\right)}^{2}+{b}^{2}\right) - \left\{{\left(c-\left(1+k\right)x\right)}^{2}+{d}^{2}\right\} > 0 .$

3. The energy storage system (100) according to claim 1, wherein when the first side tab (1422) and the second side tab (1423) are not bent toward the central tab (1421), and the first side tab (1422) is not connected to the first side surface (151), a height of each tab (142) protruding relative to the electrode core body (141) is equal.

4. The energy storage system (100) according to claim 1, wherein when the first side tab (1422) and the second side tab (1423) are not bent toward the central tab (1421), and the first side tab (1422) is not connected to the first side surface (151), a height of the first side tab (1422) protruding relative to the electrode core body (141) is greater than a height of the central tab (1421) protruding relative to the electrode core body (141), and/or a height of the second side tab (1423) protruding relative to the electrode core body (141) is greater than the height of the central tab (1421) protruding relative to the electrode core body (141).

5. The energy storage system (100) according to claim 4, wherein when the first side tab (1422) and the second side tab (1423) are not bent toward the central tab (1421), and the first side tab (1422) is not connected to the first side surface (151), a height of the tab (142) protruding relative to the electrode core body (141) first decreases and then increases along the thickness direction of the electrode core (14).

6. The energy storage system (100) according to claim 5, wherein when the first side tab (1422) and the second side tab (1423) are not bent toward the central tab (1421), and the first side tab (1422) is not connected to the first side surface (151), a spacing between any two adjacent layers of tabs (142) is equal.

7. The energy storage system (100) according to claim 5, wherein when the first side tab (1422) and the second side tab (1423) are not bent toward the central tab (1421), and the first side tab (1422) is not connected to the first side surface (151), a height difference between any two adjacent layers of tabs (142) protruding relative to the electrode core body (141) is equal.

8. The energy storage system (100) according to any one of claims 1 to 7, wherein the energy storage system (100) is a polygonal battery or a cylindrical battery.

9. The energy storage system (100) according to any one of claims 1 to 7, wherein the terminal hole (12a) comprises a first terminal hole (12a) and a second terminal hole (12a);
the terminal (13) comprises a positive terminal (131) and a negative terminal (132), the positive terminal (131) passes through the first terminal hole (12a), and the negative terminal (132) passes through the second terminal hole (12a);
the electrode core (14) comprises a first electrode core (14a) and a second electrode core (14b), the first electrode core (14a) comprises a first electrode core body (14a1) and a first positive tab (14a2) and a first negative tab (14a3) that are disposed on the first electrode core body (14a1), the second electrode core (14b) comprises a second electrode core body (14b1) and a second positive tab (14b2) and a second negative tab (14b3) that are disposed on the second electrode core body (14b1), each of the first electrode core body (14a1) and the second electrode core body (14b1) comprises the electrode core body (141), and each of the first positive tab (14a2), the first negative tab (14a3), the second positive tab (14b2), and the second negative tab (14b3) comprises the plurality of layers of tabs (142);
wherein the first electrode core (14a) and the second electrode core (14b) are arranged along the thickness direction of the electrode core (14); along the thickness direction of the electrode core (14), the first positive tab (14a2) is opposite to the second positive tab (14b2), and the first negative tab (14a3) is opposite to the second negative tab (14b3), and/or along the thickness direction of the electrode core (14), the first positive tab (14a2) and the first negative tab (14a3) are on a side of the first electrode core body (14a1) facing away from the second electrode core body (14b1), and the second positive tab (14b2) and the second negative tab (14b3) are on a side of the second electrode core body (14b1) facing away from the first electrode core body (14a1); and
the adapter (15) comprises a first adapter (15) component and a second adapter (15) component, the first adapter (15) component is electrically connected to the positive terminal (131), the first positive tab (14a2), and the second positive tab (14b2) respectively, and the second adapter (15) component is electrically connected to the negative terminal (132), the first negative tab (14a3), and the second negative tab (14b3) respectively.

10. An energy storage system (1000), comprising an energy storage device (100) according to any one of claims 1 to 9.
